# EUROPÄISCHE PATENTSCHRIFT

(11) **EP 2 835 050 B1**
(45) Veröffentlichungstag und Bekanntmachung des Hinweises auf die Patenterteilung: **07.10.2020**
(21) Anmeldenummer: 14179864.5
(22) Anmeldetag: 05.08.2014
(51) Int. Cl.: A01M 7/00

(54) **Landwirtschaftliche Verteilmaschine mit Ausbringgestänge**
Agricultural sprayer with spray boom
Pulvérisateur agricole comprenant une rampe d'pulvérisation

(30) Priorität: 09.08.2013 DE 102013108635
(43) Veröffentlichungstag der Anmeldung: 11.02.2015
(73) Patentinhaber: Lemken GmbH & Co. KG, 46519 Alpen (DE)
(72) Erfinder: Böging, Michael, 49424 Lutten-Goldenstedt (DE); van den Boom, Marco, 46509 Xanten (DE); Büsch, Johannes, 47647 Kerken-Aldekerk (DE); Dibbern, Axel, 47475 Lamp-Lintfort (DE); Giesen, Gottfried, 46519 Alpen (DE); Götzen, Nils, 47443 Moers (DE); Surborg, Carsten, 46519 Alpen (DE); Winnekens, Franz, 47475 Kamp-Lintfort (DE)

(56) Entgegenhaltungen:
- EP-A1- 1 167 095
- EP-A1- 2 311 318
- DE-A1- 4 140 254
- DE-B3-102012 105 401
- US-A- 5 755 382

## Beschreibung

Die Erfindung betrifft eine landwirtschaftliche Verteilmaschine mit Verteilgestänge gemäß dem Oberbegriff des Patentanspruches 1.

Landwirtschaftliche Verteilmaschinen, wie z.B. Düngerstreuer, Feldspritzen oder Güllewagen sind oft mit einem Verteilgestänge versehen, welches aus mindestens zwei Auslegern besteht, welche sich quer zur Fahrtrichtung über die Ausbringbreite erstrecken und von der Ausbringbreite in eine zusammengeklappte, schmalere Transportposition verstellbar sind. Zumindest für diese Verstellung sind Gelenke erforderlich, welche die Starrheit des Verteilgestänges beeinflussen. Bei Lenkbewegungen oder unebenen Bodenverhältnissen beginnt das Verteilgestänge mit den Gier- und Wankbewegungen der Verteilmaschine ebenfalls zu schwingen. Aufgrund dieser Schwingbewegungen resultiert insbesondere in den Außenbereichen der Ausleger eine unterschiedliche Längsverteilung des auszubringenden Gutes. Je nach Nähe des Auslegers zum Boden, welche durch die Wankschwingungen variiert, wird zudem die Querverteilung der Ausbringeinrichtungen wie Prallteller oder Fächerdüsen ebenfalls beeinflusst. Die amerikanische Patentanmeldung US 6 053 419 zeigt ein System zum Tilgen von Schwingungen eines Spritzgestänges, bei dem Gestängebewegungen an zwei Punkten erfasst werden und durch entgegengesetzte Hydraulikzylinderbewegungen eliminiert werden. Die deutsche Offenlegungsschrift DE 10 2011 108 480 A1 offenbart eine Lösung zur Schwingungstilgung mit einem Controller und damit verbundenen Beschleunigungssensoren. Die deutsche Patentanmeldung DE 100 54 285 A1 zeigt ein Spritzgestänge einer Feldspritze, bei dem mit einer optischen Lichtschranke oder einem Laser-Messsystem die Auslenkung der Gestängeschwingungen ermittelt und durch eine Steuerung mit aktiven Stellgliedern korrigiert werden. Ein solches System ist jedoch empfindlich gegenüber Verschmutzungen und aufwändig aufgrund der sich über das Gestänge erstreckenden Anordnung der Messkomponenten. Aus der EP 1 167 095 A1 ist schließlich eine landwirtschaftliche Verteilmaschine bekannt, die mit Abstandssensoren ausgerüstet ist, welche als unzureichend in Hinblick auf eine zuverlässige Erfassung der Schwingungen des Verteilgestänges anzusehen ist.

Aufgabe der Erfindung ist es, die Schwingungen des Verteilgestänges auf einfache und robuste Art zu erfassen und gegebenenfalls Maßnahmen zur Reduzierung dieser Schwingungen vorzunehmen. Dabei sollen sowohl Gier- als auch Wankschwingungen erfasst werden.

Diese Aufgabe wird durch die Merkmale des kennzeichnenden Teiles des Anspruches 1 gelöst.

Durch Erfassung der Gestängebewegungen mittels eines oder mehrerer bildverarbeitender Kamerasysteme kann auf einfache Weise ein Großteil der Gestängebewegungen oder seiner Bereiche auch in mehreren Freiheitsgraden an zentralen Stellen erfasst werden, ohne dabei eine aufwendige, teure und anfällige Sensorik entlang der Gestängeerstreckung zu installieren. Je nach Zuordnung des oder der Kamerasysteme zum Rahmen oder zum Verteilgestänge können Hub-, Gier- und Wankbewegungen einzeln oder gleichzeitig erfasst werden und daraus die optimalen Schritte zur Korrektur oder Optimierung der Gestängebewegungen hergeleitet werden. Erfindungsgemäss ist das Kamerasystem ein oder mehrere charakteristische Bewegungspunkte eines oder mehrerer Gestängebereiche erfassend ausgebildet, wobei die Bewegungspunkte der Kameraposition räumlich zugeordnet werden. Durch Auswertung der Bilddaten können charakteristische Bewegungspunkte wie beispielsweise Gelenk- oder Endpunkte der Gestängebereiche identifiziert werden, welche am besten geeignet sind, daraus die optimalen Schritte zur Korrektur oder Optimierung der Gestängebewegungen herzuleiten.

Die Erfindung sieht vorteilhaft die Verwendung von zumindest zwei Kamerasystemen vor, welche jeweils einen Gestängebereich bildverarbeitend erfassen, welcher sich vom Rahmen nach außen erstreckt. Die Kameras können, nach außen gerichtet, dabei der Höhenverstelleinrichtung, dem Rahmen und/oder einem eventuellen Gestängemittelteil zugeordnet werden. Durch Anordnung der Kamerasysteme in der Nähe des Rahmens wird der Gestängebereich optimal erfasst, da die Bewegungsintensität der Gestängebereiche mit zunehmender Entfernung vom Rahmen zum jeweiligen Gestängeende zunimmt. Der optische Öffnungs- oder Erfassungswinkel der Kamerasysteme gleicht bei dieser Anordnung die nach außen zunehmende Gestängebewegung, gerade als Wank- und Gierbewegung, ideal aus und erfasst die Bewegungsbereiche nahezu vollständig.

In einer erweiterten Erfindungsform werden die charakteristischen Bewegungspunkte der Gestängebereiche durch zusätzliche Mittel die Bewegungspunkterfassung des Kamerasystems unterstützend ausgebildet. Durch den Einsatz hervorhebender Mittel an zu identifizierenden Gestängepunkten, wie beispielsweise geometrischer, farblicher oder optischer Markierungen können die entsprechenden Punkte oder Bereiche sicher durch das Kamerasystem detektiert werden. Auch eine Kombination der Mittel ist vorteilhaft.

Eine besonders vorteilhafte Ausführung der Erfindung ist, dass die räumliche Lage der charakteristischen Bewegungspunkte der Gestängebereiche durch das Kamerasystem an die elektronische Steuer- und Regeleinheit übertragen wird, welche damit mittels eines Programmes oder einer Steuer- und Regelsequenz über Stellmotoren oder einstellbare Dämpferelemente die Gestängeausrichtung regelnd ausgebildet ist. Durch die Verrechnung der räumliche Lage der charakteristischen Bewegungspunkte der Gestängebereiche beispielsweise zu Koordinaten oder Bewegungsvektoren, wobei die Verrechnung sowohl in dem Kamerasystem als auch in der damit verbundenen elektronischen Steuer- und Regeleinheit erfolgen kann, werden mit hinterlegten Programmanweisungen durch die elektronische Steuer- und Regeleinheit geeignete Stellsignale an die die Gestängeausrichtung beeinflussenden Stellmotoren oder einstellbare Dämpferelemente gesendet.

In einer weiteren Form der Erfindung erfasst das Kamerasystem weiterhin die Kontur des Bodens oder die Oberkante eines Pflanzenbestandes und deren räumliche Zuordnung zur Kameraposition, welche durch die elektronische Steuer- und Regeleinheit für die Regelung der Gestängeausrichtung des Ausbringgestänges auswertbar ist. Durch die Erfassung der Bodenkontur oder der Bestandshöhe können bisher bekannte Abstandssensoren welche zur optimalen Gestängeausrichtung in Höhe und Neigung bekannt sind, unterstützt oder ersetzt werden.

In einer besonderen Erfindungsform werden ein oder mehrere Bildbereiche oder bewegte Bildbereiche der Kamerasysteme auf der Bedien- und Anzeigeeinheit visualisiert. Hierdurch ist der Bediener der landwirtschaftlichen Verteilmaschine auf komfortable Weise in die Lage versetzt, die Bewegung und Ausrichtung der Gestängebereiche einzusehen und zu überwachen.

In einer weiteren Erfindungsform sind die Kamerasysteme auch zumindest ein Teil der Ausbringeinrichtungen erfassend ausgerichtet. Hierdurch kann der Ausbringprozess der landwirtschaftlichen Maschine und die Funktion der Ausbringeinrichtungen auf einfache Art überwacht werden.

Eine den sicheren Betrieb des Gerätes unterstützende Erfindungsausführung ist, dass das Kamerasystem weiterhin Hindernisse oder Lebewesen im Bereich des Ausbringgestänges erfasst, deren räumliche Position der elektronische Steuer- und Regeleinheit mitgeteilt wird, wodurch auf der Anzeige- und Bedieneinheit ein Kollisionswarnsystem aktiviert werden kann. Durch die Erfassung von Lebewesen oder Hindernissen und Warnung des Bedieners der landwirtschaftlichen Verteilmaschine kann personeller oder materieller Schaden in einfacher Weise abgewendet werden.

In einer weiteren Erfindungsausführung steuert die elektronische Steuer- und Regeleinheit die Stellmotoren oder einstellbare Dämpferelemente bei einem durch das Kamerasystem erfassten Hindernis derart an, dass eine Kollision mit dem Hindernis vermieden oder ein Schaden an dem Ausbringgestänge oder dem Hindernis oder einem Lebewesen verringert wird. Durch aktives Verstellen oder Deaktivieren von Stellmotoren oder Dämpfungseinrichtungen am kollisionsbedrohten Gestängebereich kann der Bereich aktiv oder passiv ausweichen. Sowohl vertikale als auch horizontale Ausweichaktionen sind möglich. Auf automatische Weise kann personeller oder materieller Schaden abgewendet werden.

In einer erweiterten Form der Erfindung werden die erfassten Daten des Kamerasystems kontinuierlich in Intervallen oder aufgrund eines Ereignisses in einem Datenspeicher abgelegt und können wieder ausgelesen werden. Insbesondere Aufnahmen des behandelten Pflanzenbestandes, der Ausbringqualität oder anderer Parameter können für eine spätere Auswertung aufgezeichnet werden. Dabei ist ein interner Datenspeicher zur Übertragung an einen externen Computer oder ein mobiler Datenträger vorgesehen.

In einer noch weitergehenden Form der Erfindung werden die erfassten Daten des Kamerasystems mit einem Zeitstempel oder mit erfassten Ortskoordinaten versehen und kontinuierlich, in Intervallen oder aufgrund eines Ereignisses in einem Datenspeicher abgelegt werden und können wieder ausgelesen werden. Hierdurch kann der Anwender des Gerätes Bilddaten zeit- und ortsspezifisch für eine weitere Verarbeitung abspeichern, auch zur Übertragung an einen externen Computer. Auch das Erfassen von Hindernissen, Pflanzenbewuchs und deren Unterschiede sowie Schad- und Krankheitsbilder des Pflanzenbestandes können so nebenbei dokumentiert werden.

In einer speziellen Form der Ausführung der Erfindung ist das verwendete Kamerasystem als zwei- oder dreidimensionales Kamerasystem mit einem sensitiven Spektralbereich über den sichtbaren Bereich hinaus im Mikrowellen-, Infrarot- oder Ultraviolett-Spektrum ausgebildet. Gerade mit einem 3D-Kamererasystem, beispielsweise als stereoskopisches Kamerasystem, können die Bewegungspunkte räumlich erfasst werden. Durch den infraroten oder nahinfraroten Spektralbereich ist eine besondere Eignung auch bei schlechten Sichtverhältnissen vorhanden. Auch andere Wellenlängenbereiche bis in den Mikrowellen- oder sichtbaren Wellenlängenbereich sind denkbar, ebenso bis in den ultravioletten Lichtbereich aufgrund der möglichen Nutzung fluoreszierender und somit einfach zu detektierender Gestängebestandteile.

In einer weiteren Erfindungsform ist das verwendete Kamerasystem als zwei- oder dreidimensionales Kamerasystem mit einem Chipmatrixsystem mit Abstandserkennung, Strahlungslaufzeitmesssystem oder Objekttrackingsystem ausgebildet. Somit wird die Objektauswertung und Bewegungsverfolgung der Gestängebereiche kostengünstig in das Kamerasystem integriert. Insbesondere ein 3D-Infrarotkamerasystem mit einem Chipmatrixsystem und integrierter Lichtlaufzeitermittlung oder einem Objekttrackingsystem hat sich als besonders geeignet erwiesen.

In einer bevorzugten Ausführung der Erfindung ist die landwirtschaftliche Verteilmaschine als landwirtschaftliche Feldspritze ausgebildet. Gerade beim Ausbringen von Pflanzenschutzmitteln kommt es auf eine exakte Führung der Ausbringeinrichtungen an, um örtliche Unter- oder Überdosierungen der verwendeten Pflanzenschutzmittel mit Rücksicht auf die Gesundheit von Pflanzen, Menschen und Tieren zu vermeiden.

Die Erfindung zeichnet sich insbesondere dadurch aus, dass mittels eines 3D-Kamerasystemes ein dreidimensionales Abstandsbild der erfassten Gestängekonturen ermittelt werden kann. Dabei wird in dem Kamerasystem mittels einer Chipmatrix ein dreidimensionales Abstandsbild sowie ein Grau- oder Farbbild der erfassten Szene ermittelt. Durch das Erfassen der Gestängekonturen relativ zur bekannten Kameraposition wird in Verbindung mit einem Steuer- und Regelsystem sowie aktiven Stellmotoren oder semiaktiven, einstellbaren Feder-Dämpfersystemen eine robuste und regelstabile Schwingungstilgung für ein bewegliches Verteilgestänge realisiert. Dabei können zur Kontrolle des Ausbring- oder des Regelverhaltens die Bilddaten visuell ausgewertet oder abgespeichert werden. Mit der erfindungsgemäßen Lösung wird insbesondere der - verglichen mit der Wankdynamik - um ein Vielfaches größere Einfluss der Gierdynamik auf die Verteilgenauigkeit berücksichtigt. Gerade an den äußeren Punkten eines Gestänges kann es ansonsten zu Über- oder Unterdosierungen des Pflanzenschutzmittels kommen. Den Gierbewegungen, die durch Beschleunigung beim An-, Auf- und Abfahren oder bei ungünstigen Bodenbeschaffenheiten sowie durch Wind entstehen, wird durch das aktive Eingreifen der Dämpfer und Federn auf das Gestänge erfolgreich entgegengewirkt.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: zeigt eine schematische Draufsicht einer landwirtschaftlichen Verteilmaschine
- Figur 2: zeigt eine schematische Heckansicht einer landwirtschaftlichen Verteilmaschine

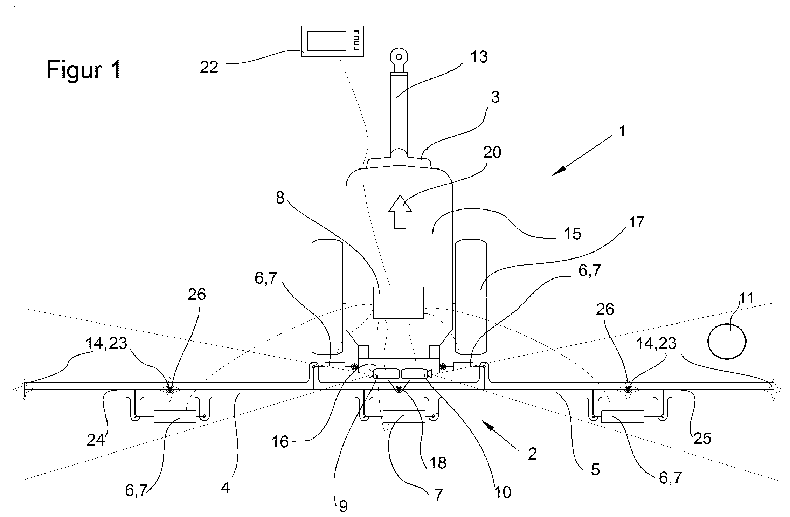

In Figur 1 ist eine landwirtschaftliche Verteilmaschine 1 dargestellt, welche mit einer Zugeinrichtung 13 an einen nicht dargestellten Traktor angehängt ist. Der Traktor dient zur Fortbewegung und zur Energieversorgung. Die Zugeinrichtung 13 ist mit dem Rahmen 3 fest verbunden. Auch eine lenkbare Variante ist denkbar. Ebenfalls sind aber auch an den Traktor angebaute oder selbstfahrende Verteilmaschinen möglich. Der Rahmen 3 trägt einen oder mehrere Vorratsbehälter 15 und stützt sich über die Laufachse 17 zum Boden ab. Über die Höhenverstelleinrichtung 16 ist das Ausbringgestänge 2 mit den Rahmen 3 höhenverstellbar beweglich verbunden. Die Höhenverstelleinrichtung 16 ist Bestandteil des Rahmens 3. Das Ausbringgestänge 2 ist in die Gestängebereiche 24, 4, 5 und 25 aufgeteilt. Die einzelnen Bereiche sind durch Gelenke 18, 26 miteinander verbunden und werden zudem über Stellmotoren 6 oder einstellbare Dämpferelemente 7 stabilisiert. Auch mehrere oder weniger Gestängebereiche sind sowie ein zentrischer Mittelbereich sind möglich. Die einstellbaren Dämpferelemente können als Feder-Dämpferelemente ausgebildet sein. Die beiden mittleren Gestängebereiche 4 und 5 werden durch das mit einer vertikalen Achse versehenen Gelenk 18 zueinander und zum Rahmen 3 beziehungsweise zur Höhenverstelleinrichtung 16 beweglich gelagert. Für die Funktion der landwirtschaftlichen Verteilmaschine 1 ist eine Höhenverstelleinrichtung 16 nicht zwingend erforderlich, aber von Vorteil. Daher schließt eine beanspruchte Verbindung von Elementen wie 4, 5, 6, 7, 18 zum Rahmen 3 ebenfalls eine mögliche Verbindung zur Höhenverstelleinrichtung 16 ein, falls diese funktional erforderlich ist. Die beiden Gestängebereiche 4 und 5 werden über einstellbaren Dämpferelemente 7 gegeneinander stabilisiert sowie über weitere Stellmotoren 6 und Dämpferelemente 7 gegenüber dem Rahmen 3 abgestützt. Die Stellmotoren 6 oder die einstellbaren Dämpferelemente 7 sind mit der Steuer und Regelungseinrichtung 8 über Leitungssysteme verbunden. Die Ansteuerung kann beispielsweise elektrisch, pneumatisch oder hydraulisch erfolgen. An der Höhenverstelleinrichtung 16 sind zwei Kamerasysteme 9, 10 angebracht, welche jeweils die linken Gestängebereiche 4, 24 beziehungsweise die rechten Gestängebereiche 5, 25 mit der jeweiligen Umgebung durch ihr Kameraobjektiv erfassen. Die Kamerasysteme können auch dem Rahmen 3, dem Vorratsbehälter 15 oder beispielsweise den Gestängebereichen 4 und 5 zugeordnet sein. Auch sind ein einzelnes oder noch mehr Kamerasysteme möglich. Der Erfassungsbereich der Kamerasysteme 9, 10 ist durch Linien verdeutlicht, kann jedoch auch größere oder kleinere Bereiche abdecken. Am äußeren Ende der Gestängebereiche 24, 25 sowie an den Gelenken 26 sind jeweils Mittel 23 angebracht, die die Erkennung und Bewegungserfassung durch die Kamerasysteme 9, 10 erleichtern. Exemplarisch sind hier die Endpunkte des Gestänges und die Gelenke 26 als charakteristische Bewegungspunkte 14 der Gestängebereiche 4, 5, 24, 25 dargestellt. Diese können farblich gegenüber den Gestängebereichen 24, 4, 5, 25 hervorgehoben sein oder geometrische Regelformen wie Kugeln, Quader oder andere geeignete Formen aufweisen. Die von dem Kamerasystem 9, 10 erfassten Bild- oder Bewegungsdaten der Gestängebereiche 4, 5, 24, 25 oder ihrer charakteristischen Bewegungspunkte 14 werden über Leitungsverbindungen an die Steuer- und Regeleinrichtung 8 übertragen. Die Kommunikation zwischen Kamerasystem 9,10 und der Steuer- und Regeleinrichtung 8 findet beispielsweise über ein Bussystem wie CAN- oder LIN-Bus statt. Ebenfalls sind analoge als auch andere digitale Übertragungswege kabelgebunden oder drahtlos denkbar. Ethernet- oder W-LAN-Netzwerke seien hier beispielsweise erwähnt. Erfasst ein Kamerasystem 9,10 nun ein Hindernis 11, wird dessen Position zum Ausbringgestänge 2 oder zur landwirtschaftlichen Verteilmaschine 1 über die bekannte Kamerasystemposition berechnet und die Steuer- und Regeleinrichtung 8 deaktiviert einen entsprechenden Stellmotor 6 oder einen einstellbaren Dämpfer 7. Der betroffene Gestängebereich 25 kann nun frei dem Hindernis 11 ausweichen. Somit wird ein Schaden für das Gestänge 2 oder das Hindernis 11 abgewendet. Schwingt nun einen Gestängebereich 24, 4, 5, 25 zu weit nach vorne oder nach hinten, wird aufgrund der durch das Kamerasystem 9, 10 erfassten Gestängepositionen beziehungsweise räumlichen Position oder Lage der charakteristischen Bewegungspunkte 14 oder der Mittel 23 die Ausrichtung des Gestänges 2 durch die Steuer- und Regeleinrichtung 8 und die Stellmotoren 6 oder die einstellbaren Dämpferelemente 7 korrigierend angesteuert und geregelt, bis das Ausbringgestänge 2 mit allen Gestängebereichen 24, 4, 5, 25 zueinander fluchtend wieder annähernd quer zur Fahrtrichtung 20 ausgerichtet ist. Dabei können auf der Steuer- und Regeleinrichtung 8 Algorithmen hinterlegt sein, welche sowohl einzelne als auch mehrere Stellmotoren 6 oder einstellbare Dämpfersysteme 7 in gleicher oder unterschiedlicher Wirkung aktivieren, deaktivieren oder in ihren dynamischen Eigenschaften manipulieren. Die Steuer- und Regeleinrichtung 8 kann durch weitere Sensoren wie beispielsweise Gier- oder Beschleunigungsmesser sowie Winkel- oder Wegaufnehmer in ihrer Regelung unterstützt werden. Die durch die Kamerasysteme 9,10 erfassten Bilddaten können als Bildfolge oder als Videosequenzen auf der Anzeige- und Bedieneinheit 22 dem Bediener der landwirtschaftlichen Verteilmaschine 1 angezeigt werden. Die Anzeige und Bedieneinheit 22 ist auf dem Traktor im Bereich des Bedieners angeordnet und mit der Steuer- und Regeleinrichtung 8 über ein Datenbussystem verbunden.

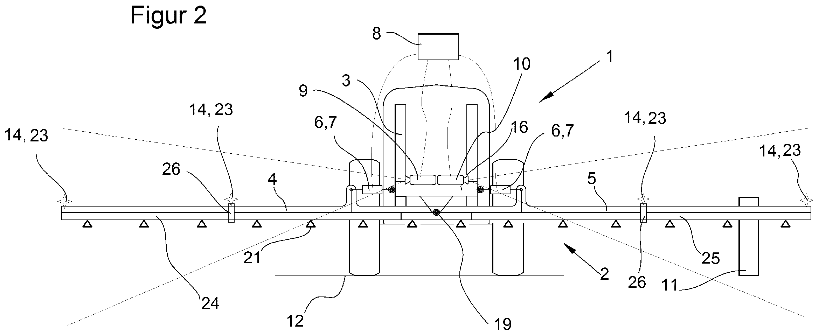

In Figur 2 ist die landwirtschaftliche Verteilmaschine 1 in Fahrtrichtung von hinten dargestellt. An der Höhenverstelleinrichtung 16 als Bestandteil des Rahmens 3 sind die beiden Gestängebereiche 4,5 über das Gelenk 19 um eine horizontale Achse pendelnd aufgehängt und über die Stellmotoren 6 und/oder der einstellbaren Dämpferelemente 7 mit den Rahmen beziehungsweise der Höhenverstelleinrichtung 16 beweglich verbunden. Mit den weiteren Gestängebereichen 24, 25 und den beabstandet zueinander angeordneten Ausbringeinrichtungen 21 bilden sie das Ausbringgestänge 2, welches im Abstand und annähernd parallel zum Boden 12 oder zu einer Pflanzenbestandskante ausgerichtet ist. Die Ausbringeinrichtungen sind beispielsweise Düsen zum Verteilen von Material, welches aus dem Vorratsbehälter 15 über nicht weiter detaillierten Dosier- Förder- und Leitungssystemen bis an die Ausbringeinrichtungen 21 herangeführt wird. Die Gelenke 26 sind in ihrer Funktion bereits in Figur 1 beschrieben. Die Kamerasysteme 9, 10 sind auf der Höhenverstelleinrichtung 16 angeordnet und erfassen die Gestängebereiche 4, 24 beziehungsweise 5, 25 den Boden 12, eine Pflanzenbestandskante oder eventuelle Hindernisse 11. Die Kamerasysteme 9,10 erfassen hier die Wankbewegungen der Gestängebereiche 24, 4, 5, 25 oder der charakteristischen Bewegungspunkte 14 oder der Mittel 23 relativ zum Boden 12, zur Höhenverstelleinrichtung 16 oder zur landwirtschaftlichen Verteilmaschine 1 und melden diese, wie bereits zuvor in Figur 1 beschrieben, zur Steuer- und Regeleinrichtung 8. Die Steuer- und Regeleinrichtung greift nun regelnd ein und manipuliert die Stellmotoren und/oder die einstellbaren Dämpferelemente, bis die Gestängebereiche 24,4,5,25 parallel zur Kontur des Bodens oder einer Pflanzenbestandskante im richtigen Abstand ausgerichtet sind. Ebenso wie zuvor beschrieben, kann auch hier eine Kollision des Gestänges 2 mit einem Hindernis 11 oder dem Boden 12 vermieden werden.

## Patentansprüche

1. Landwirtschaftliche Verteilmaschine (1) mit einem Rahmen (3), einem oder mehreren Vorratsbehältern (15), zumindest einer Fördereinrichtung und zumindest einer Dosiereinrichtung und einem Ausbringgestänge (2) mit Ausbringeinrichtungen (21) zum Ausbringen von Flüssigkeiten oder körnigen oder granulierten Stoffen, wobei das Ausbringgestänge (2) beweglich am Rahmen (3) angeordnet ist, wobei das Ausbringgestänge (2) in mehrere Gestängebereiche (4, 5, 24, 25) unterteilt ist, welche gelenkig oder verschiebbar zueinander oder zum Rahmen (3) beweglich angeordnet sind und welche eine Transportposition und eine Arbeitsposition einnehmen können, wobei sich die Ausrichtung der Gestängebereiche (4, 5, 24 ,25) des Ausbringgestänges (2) in der Arbeitsposition im Wesentlichen quer zur Fahrtrichtung (20) der landwirtschaftliche Verteilmaschine (1) und annähernd parallel zum Boden (12) beabstandet erstreckt, wobei die Bewegung des Ausbringgestänges (2) zum Rahmen (3) oder die Bewegung der Gestängebereiche (4, 5, 24, 25) zueinander oder zum Rahmen (3) mit Stellmotoren (6) und/oder über einstellbare Dämpferelemente (7) ermöglicht, unterstützt, blockiert oder eingeschränkt werden kann, wobei zur Steuerung der Bewegung des Ausbringgestänges (2) zum Rahmen (3) oder der Bewegung der Gestängebereiche (4, 5, 24, 25) zueinander oder zum Rahmen (3) eine elektronische Steuer- und Regeleinheit (8) vorgesehen ist, welche vorzugsweise mit einer Anzeige- und Bedieneinheit (22) verbunden ist, **dadurch gekennzeichnet, dass** die Position oder die Bewegungen zumindest eines Teiles der Gestängebereiche (4, 5, 24, 25) des Ausbringgestänges (2) durch mindestens zwei Kamerasysteme (9, 10) bildverarbeitend erfasst wird, wobei jeweils ein Kamerasystem (9, 10) der Höhenverstelleinrichtung (16) oder dem Rahmen (3) zugeordnet ist und einen Gestängebereich (4, 5, 24, 25) erfasst, welcher sich vom Rahmen (3) nach außen erstreckt,
wobei das Kamerasystem (9, 10) ein oder mehrere charakteristische Bewegungspunkte (14) eines oder mehrerer Gestängebereiche (4, 5, 24, 25) erfassend ausgebildet ist und die charakteristischen Bewegungspunkte (14) der Kameraposition räumlich zugeordnet werden können.

2. Landwirtschaftliche Verteilmaschine nach Anspruch 1,
**dadurch gekennzeichnet,**
**dass** die von dem Kamerasystem (9,10) erfassten Bild oder Bewegungsdaten der Gestängebereiche (4, 5, 24, 25) oder ihrer charakteristischen Bewegungspunkte (14) an die Steuer- und Regeleinrichtung (8) übertragen werden.

3. Landwirtschaftliche Verteilmaschine nach vorstehenden Ansprüchen,
**dadurch gekennzeichnet,**
**dass** die charakteristischen Bewegungspunkte (14) der Gestängebereiche (4, 5, 24, 25) durch zusätzliche Mittel (23) die Bewegungspunkterfassung des Kamerasystems (9, 10) unterstützend ausgebildet sind.

4. Landwirtschaftliche Verteilmaschine nach vorstehenden Ansprüchen,
**dadurch gekennzeichnet,**
**dass** die räumliche Lage der charakteristischen Bewegungspunkte (14) der Gestängebereiche (4, 5, 24, 25) durch das Kamerasystem (9,10) an die elektronische Steuer- und Regeleinheit (8) übertragen wird, welche damit mittels eines Programmes oder einer Steuer- und Regelsequenz über Stellmotoren (6) oder einstellbare Dämpferelemente (7) die Gestängeausrichtung des Ausbringgestänges (2) regelnd ausgebildet ist.

5. Landwirtschaftliche Verteilmaschine nach vorstehenden Ansprüchen,
**dadurch gekennzeichnet,**
**dass** das Kamerasystem (9, 10) weiterhin die Kontur des Bodens (12) oder die Oberkante eines Pflanzenbestandes erfassend ausgebildet ist und deren räumliche Zuordnung zur Kameraposition durch die elektronische Steuer- und Regeleinheit (8) zur Regelung der Gestängeausrichtung des Ausbringgestänges (2) auswertbar ist.

6. Landwirtschaftliche Verteilmaschine nach vorstehenden Ansprüchen,
**dadurch gekennzeichnet,**
**dass** ein oder mehrere Bildbereiche oder bewegte Bildbereiche der Kamerasysteme (9, 10) auf einer Anzeige- und Bedieneinheit (22) visualisierbar sind.

7. Landwirtschaftliche Verteilmaschine nach vorstehenden Ansprüchen,
**dadurch gekennzeichnet,**
**dass** die Kamerasysteme (9, 10) auch zumindest ein Teil der Ausbringeinrichtungen (21) erfassend ausgerichtet sind.

8. Landwirtschaftliche Verteilmaschine nach vorstehenden Ansprüchen,
**dadurch gekennzeichnet,**
**dass** das Kamerasystem (9, 10) weiterhin Hindernisse (11) oder Lebewesen im Bereich des Ausbringgestänges (2) erfasst, deren räumliche Position der elektronische Steuer- und Regeleinrichtung (8) mitgeteilt wird, wodurch auf der Anzeige- und Bedieneinheit (22) ein Kollisionswarnsystem aktiviert werden kann.

9. Landwirtschaftliche Verteilmaschine nach vorstehenden Ansprüchen,
**dadurch gekennzeichnet,**
**dass** die elektronische Steuer- und Regeleinheit (8) die Stellmotoren (6) oder einstellbare Dämpferelemente (7) bei einem durch das Kamerasystem (9,10) erfassten Hindernis (11) derart ansteuert, dass eine Kollision mit dem Hindernis (11) vermieden oder ein Schaden an dem Ausbringgestänge (2) oder dem Hindernis (11) oder einem Lebewesen verringert wird.

10. Landwirtschaftliche Verteilmaschine nach vorstehenden Ansprüchen,
**dadurch gekennzeichnet,**
**dass** die erfassten Daten des Kamerasystems (9, 10) kontinuierlich in Intervallen oder aufgrund eines Ereignisses in einem Datenspeicher abgelegt werden und wieder ausgelesen werden können.

11. Landwirtschaftliche Verteilmaschine nach vorstehenden Ansprüchen,
**dadurch gekennzeichnet,**
**dass** die erfassten Daten des Kamerasystems (9, 10) mit einem Zeitstempel oder mit erfassten Ortskoordinaten versehen und kontinuierlich in einem Datenspeicher abgelegt werden und wieder ausgelesen werden können.

12. Landwirtschaftliche Verteilmaschine nach vorstehenden Ansprüchen,
**dadurch gekennzeichnet,**
**dass** das verwendete Kamerasystem (9, 10) als zwei- oder dreidimensionales Kamerasystem mit einem sensitiven Spektralbereich über den sichtbaren Bereich hinaus im Mikrowellen-, Infrarot- oder Ultraviolett-Spektrum ausgebildet ist.

13. Landwirtschaftliche Verteilmaschine nach vorstehenden Ansprüchen,
**dadurch gekennzeichnet,**
**dass** das verwendete Kamerasystem als zwei- oder dreidimensionales Kamerasystem mit einem Chipmatrixsystem mit Abstandserkennung, Strahlungslaufzeitmesssystem oder Objekttrackingsystem ausgebildet ist.

14. Landwirtschaftliche Verteilmaschine nach vorstehenden Ansprüchen,
**dadurch gekennzeichnet,**
**dass** die landwirtschaftliche Verteilmaschine (1) als landwirtschaftliche Feldspritze ausgebildet ist.

## Claims

1. An agricultural distribution machine (1) having a frame (3), one or more storage containers (15), at least one conveying device and at least one dosing device and a spreader boom (2) having spreading devices (21) for spreading liquids or grainy or granulated substances, wherein the spreader boom (2) is moveably arranged on the frame (3), wherein the spreader boom (2) is subdivided into multiple boom regions (4, 5, 24, 25), which are arranged articulatorily or displaceably relative to one another or moveably relative to the frame (3) and which can assume a transport position and a working position, wherein the orientation of the boom regions (4, 5, 24, 25) of the spreader boom (2) in the working position substantially extends transversely to the travelling direction (20) of the agricultural distribution machine (1) and approximately spaced apart parallel to the ground (12), wherein the movement of the spreader boom (2) relative to the frame (3) or the movement of the boom regions (4, 5, 24, 25) relative to one another or relative to the frame (3) can be made possible, supported, blocked or restricted with servo motors (6) and/or via adjustable damper elements (7), wherein for controlling the movement of the spreader boom (2) relative to the frame (3) or of the movement of the boom regions (4, 5, 24, 25) relative to one another or relative to the frame (3) an electronic control and regulating unit (8) is provided, which is preferentially connected to a display and operating unit (22),
**characterized in that**
the position or the movements of at least a part of the boom regions (4, 5, 24, 25) of the spreader boom (2) is captured by at least two camera systems (9, 10) in an image-processing manner, wherein in each case a camera system (9, 10) is assigned to the height adjusting device (16) or the frame (3) and captures a boom region (4, 5, 24, 25), which extends from the frame (3) to the outside, wherein the camera system (9, 10) is designed so as to capture one or more characteristic movement points (14) of one or more boom regions (4, 5, 24, 25) and the characteristic movement points (14) can be spatially assigned to the camera position.

2. The agricultural distribution machine according to Claim 1,
**characterized in that**
the image or movement data of the boom regions (4, 5, 24, 25) captured by the camera system (9, 10) or its characteristic movement points (14) are transmitted to the control and regulating device (8).

3. The agricultural distribution machine according to the preceding claims,
**characterized in that**
the characteristic movement points (14) of the boom regions (4, 5, 24, 25) are designed so as to support the movement point capture of the camera system (9, 10) through additional means (23).

4. The agricultural distribution machine according to the preceding claims,
**characterized in that**
the spatial position of the characteristic movement points (14) of the boom regions (4, 5, 24, 25) is transmitted by the camera system (9, 10) to the electronic control and regulating unit (8), which is thus designed so as to regulate the boom orientation of the spreader boom (2) by means of a program or of a control and regulating sequence via servo motors (6) or adjustable damper elements (7).

5. The agricultural distribution machine according to the preceding claims,
**characterized in that**
the camera system (9, 10) furthermore is designed so as to capture the contour of the ground (12) or the upper edge of a plant population and the spatial association relative to the camera position is evaluatable by the electronic control and regulating device (8) for regulating the boom orientation of the spreader boom (2).

6. The agricultural distribution machine according to the preceding claims,
**characterized in that**
one or more image regions or moving image regions of the camera systems (9, 10) are visualizable on a display and operating unit (22).

7. The agricultural distribution machine according to the preceding claims,
**characterized in that**
the camera systems (9, 10) are orientated so as to also capture at least one part of the spreading devices (21).

8. The agricultural distribution machine according to the preceding claims,
**characterized in that**
the camera system (9, 10) furthermore captures obstacles (11) or living creatures in the region of the spreader boom (2), whose spatial position is imparted to the electronic control and regulating device (8), as a result of which on the display and operating unit (22) a collision warning system can be activated.

9. The agricultural distribution machine according to the above claims,
**characterized in that**
the electronic control and regulating unit (8) activates the servo motors (6) or adjustable damper elements (7) in the case of an obstacle (11) detected by the camera system (9, 10) in such a manner that a collision with the obstacle (11) is avoided or damage to the spreader boom (2) or the obstacle (11) or a living creature is reduced.

10. The agricultural distribution machine according to preceding claims,
**characterized in that**
the captured data of the camera system (9, 10) can be continuously stored in a data memory and read out again at intervals or based on an event.

11. The agricultural distribution machine according to the preceding claims,
**characterized in that**
the captured data of the camera system (9, 10) can be provided with a timestamp or with captured place coordinates and continuously stored in a data memory and read out again.

12. The agricultural distribution machine according to the preceding claims,
**characterized in that**
the camera system (9, 10) used is designed as two or three-dimensional camera system with a sensitive spectral range beyond the visible range in the microwave, infrared or ultraviolet spectrum.

13. The agricultural distribution machine according to the preceding claims,
**characterized in that**
the camera system used is designed as two or three-dimensional camera system with a chip matrix system with distance detection, radiation duration measurement system or object tracking system.

14. The agricultural distribution machine according to the preceding claims,
**characterized in that**
the agricultural distribution machine (1) is designed as agricultural field sprayer.

## Revendications

1. Épandeur agricole (1), pourvu d'un cadre (3), d'un ou de plusieurs réservoirs de stockage (15), d'au moins un système de convoyage et d'au moins un système de dosage et d'une rampe d'épandage (2) pourvue de systèmes d'épandage (21), destinée à épandre des liquides ou des substances granuleuses ou granulées, la rampe d'épandage (2) étant placée de manière mobile sur le cadre (3), la rampe d'épandage (2) étant divisée en plusieurs zones de rampe (4, 5, 24, 25), lesquelles sont placées en étant mobiles de manière articulée ou déplaçable les unes par rapport aux autres ou par rapport au cadre (3) et lesquelles sont aptes à adopter une position de transport et une position de travail, l'orientation des zones de rampe (4, 5, 24 ,25) de la rampe d'épandage (2) dans la position de travail s'étendant sensiblement à la transversale de la direction de déplacement (20) de l'épandeur agricole (1) et avec un écart approximativement à la parallèle du sol (12), le déplacement de la rampe d'épandage (2) par rapport au cadre (3) ou le déplacement des zones de rampe (4, 5, 24, 25) les unes par rapport aux autres ou par rapport au cadre (3) étant susceptible d'être permis, assisté, bloqué ou restreint à l'aide de servomoteurs (6) et/ou par l'intermédiaire d'éléments amortisseurs (7) réglables, pour commander le déplacement de la rampe d'épandage (2) par rapport au cadre (3) ou le déplacement des zones de rampe (4, 5, 24, 25) les unes par rapport aux autres ou par rapport au cadre (3) étant prévue une unité de commande et de réglage (8) électronique, laquelle est connectée de préférence avec une unité d'affichage et de manipulation (22),
**caractérisé**
**en ce que** la position ou les déplacements d'au moins une partie des zones de rampe (4, 5, 24, 25) de la rampe d'épandage (2) est/sont détecté(e)(s) avec traitement d'images par au moins deux systèmes de caméras (9, 10), chaque fois un système de caméra (9, 10) étant affecté au système de réglage de la hauteur (16) ou au cadre (3) et détectant une zone de rampe (4, 5, 24, 25), laquelle s'étend vers l"extérieur à partir du cadre (3), le système de caméra (9, 10) étant conçu pour détecter un ou plusieurs points de déplacement caractéristiques (14) d'une ou de plusieurs zones de rampe (4, 5, 24, 25) et les points de déplacement caractéristiques (14) pouvant être affectés dans l'espace à la position de la caméra.

2. Épandeur agricole selon la revendication 1,
**caractérisé**
**en ce que** les données d'image ou de déplacement des zones de rampe (4, 5, 24, 25) ou de leurs points de déplacement caractéristiques (14) détectées par le système de caméra (9,10) sont transférées au système de commande et de réglage (8).

3. Épandeur agricole selon des revendications précédentes,
**caractérisé**
**en ce que** les points de déplacement caractéristiques (14) des zones de rampe (4, 5, 24, 25) sont conçus pour assister par des moyens supplémentaires (23) la détection des points de déplacement par le système de caméra (9, 10).

4. Épandeur agricole selon des revendications précédentes,
**caractérisé**
**en ce que** la situation dans l'espace des points de déplacement caractéristiques (14) des zones de rampe (4, 5, 24, 25) est transférée par le système de caméra (9,10) à l'unité de commande et de réglage (8) électronique, laquelle est ainsi conçue de manière à assurer le réglage de l'orientation de rampe de la rampe d'épandage (2) au moyen d'un programme ou d'une séquence de commande et de réglage par l'intermédiaire de servomoteurs (6) ou d'éléments amortisseurs (7) réglables.

5. Épandeur agricole selon des revendications précédentes,
**caractérisé**
**en ce que** le système de caméra (9, 10) est conçu en outre pour détecter le contour du sol (12) ou l'arête supérieure d'une végétation et **en ce que** son affectation dans l'espace par rapport à la position de la caméra est susceptible d'être évaluée par l'unité de commande et de réglage (8) électronique, pour le réglage de l'orientation de rampe de la rampe d'épandage (2).

6. Épandeur agricole selon des revendications précédentes,
**caractérisé**
**en ce qu'**une ou plusieurs zones d'images ou zones d'images déplacées des systèmes de caméras (9, 10) sont visualisables sur une unité d'affichage et de manipulation (22).

7. Épandeur agricole selon des revendications précédentes,
**caractérisé**
**en ce que** les systèmes de caméras (9, 10) sont également orientés de manière à détecter au moins une partie des systèmes d'épandage (21).

8. Épandeur agricole selon des revendications précédentes,
**caractérisé**
**en ce que** le système de caméra (9, 10) détecte par ailleurs des obstacles (11) ou des organismes vivants dans la zone de la rampe d'épandage (2), dont la position dans l'espace est communiquée au système de commande et de réglage (8) électronique, suite à quoi, un système d'alerte de collision peut être activé sur l'unité d'affichage et de manipulation (22).

9. Épandeur agricole selon des revendications précédentes,
**caractérisé**
**en ce que** lorsque le système de caméra (9,10) détecte un obstacle (11), l'unité de commande et de réglage (8) active les servomoteurs (6) ou les éléments amortisseurs (7) réglables de telle sorte qu'une collision avec l'obstacle (11) soit évitée ou un dommage sur la rampe d'épandage (2) ou sur l'obstacle (11) ou sur un organisme vivant soit réduit.

10. Épandeur agricole selon des revendications précédentes,
**caractérisé**
**en ce que** les données détectées par le système de caméra (9, 10) peuvent être sauvegardées dans une mémoire de données en continu, à des intervalles ou suite à un événement et relues par la suite.

11. Épandeur agricole selon des revendications précédentes,
**caractérisé**
les données détectées par le système de caméra (9, 10) peuvent être munies d'un horodateur ou de coordonnées de localisation détectées et sauvegardées en continu dans une mémoire de données et relues par la suite.

12. Épandeur agricole selon des revendications précédentes,
**caractérisé**
**en ce que** le système de caméra (9, 10) utilisé est conçu sous la forme d'un système de caméra bidimensionnel ou tridimensionnel, avec un domaine spectral sensible au-delà du domaine visible dans le spectre des micro-ondes, de l'infrarouge ou des ultraviolets.

13. Épandeur agricole selon des revendications précédentes,
**caractérisé**
**en ce que** le système de caméra utilisé est conçu sous la forme d'un système de caméra bidimensionnel ou tridimensionnel, avec un système à matrice de puce avec reconnaissance de la distance, système de mesure du temps de transit des rayons ou système de suivi d'objet.

14. Épandeur agricole selon des revendications précédentes,
**caractérisé**
**en ce que** l'épandeur agricole (1) est conçu sous la forme d'un pulvérisateur agricole.
